(19) Europäisches Patentamt / European Patent Office / Office européen des brevets

(11) **EP 2 782 709 B1**

(12) **FASCICULE DE BREVET EUROPEEN**

(45) Date de publication et mention
de la délivrance du brevet:
**07.10.2015 Bulletin 2015/41**

(21) Numéro de dépôt: **12795540.9**

(22) Date de dépôt: **14.11.2012**

(51) Int Cl.:
*B24B 13/06* (2006.01)     *B24B 5/36* (2006.01)
*B23B 27/14* (2006.01)     *B23C 3/02* (2006.01)
*B28D 1/22* (2006.01)     *B28D 1/30* (2006.01)
*B29D 11/00* (2006.01)     *G02C 7/02* (2006.01)

(86) Numéro de dépôt international:
**PCT/FR2012/052620**

(87) Numéro de publication internationale:
**WO 2013/076403 (30.05.2013 Gazette 2013/22)**

(54) **PROCÉDÉ D'OBTENTION D'UNE LENTILLE OPHTALMIQUE**

VERFAHREN ZUR HERSTELLUNG EINER KONTAKTLINSE

METHOD FOR OBTAINING AN OPHTHALMIC LENS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.11.2011  FR 1160664**

(43) Date de publication de la demande:
**01.10.2014  Bulletin 2014/40**

(73) Titulaire: **ESSILOR INTERNATIONAL
(COMPAGNIE GENERALE D'OPTIQUE)
94220 Charenton-le-Pont (FR)**

(72) Inventeur: **MEYNEN, Mathieu
F-94220 Charenton-le-pont (FR)**

(74) Mandataire: **Santarelli
49, avenue des Champs-Elysées
75008 Paris (FR)**

(56) Documents cités:
**WO-A1-01/66308     WO-A1-2006/097607
US-A- 5 938 381**

EP 2 782 709 B1

**Description**

DOMAINE DE L'INVENTION

L'invention a trait à l'obtention d'une lentille ophtalmique à partir d'un palet fait dans une matière apte à être surfacée par usinage.

ARRIERE PLAN TECHNOLOGIQUE

On sait que pour obtenir à partir d'un tel palet une lentille ophtalmique ayant les caractéristiques optiques recherchées, par exemple pour corriger la vision d'un porteur myope, astigmate et/ou presbyte, on met en oeuvre une étape de surfaçage par usinage d'une face du palet.

Cette étape de surfaçage comporte successivement une étape d'usinage d'une surface d'ébauche et une étape d'usinage d'une surface de finition (voir par exemple la demande internationale WO 01/66308).

L'étape d'usinage d'une surface d'ébauche est mise en oeuvre avec une machine comportant un outil d'ébauche, par exemple tel que décrit dans le brevet américain 5,938,381, formant une surface d'ébauche présentant un sillon d'ébauche ayant un profil en arc de cercle dont le rayon de courbure est fixé par la forme de l'outil d'ébauche et ayant un pas défini par une consigne d'avance d'ébauche donnée à la machine.

L'étape d'usinage d'une surface de finition est mise en oeuvre avec une machine comportant un outil de finition, par exemple tel que décrit dans la demande internationale WO 2006/097607, à laquelle correspond la demande de brevet américain US 2009/0022554, cet outil de finition formant une surface de finition en creusant la surface d'ébauche, sur une profondeur définie par une consigne de profondeur de passe de finition donnée à la machine, en formant un sillon de finition ayant un pas défini par une consigne d'avance de finition donnée à la machine.

L'étape de surfaçage par usinage est suivie par une étape de polissage qui vient donner le rendu optique de la surface sans en modifier la forme.

OBJET DE L'INVENTION

L'invention vise à améliorer l'étape de surfaçage par usinage d'une face d'un palet destiné à devenir une lentille ophtalmique.

Elle propose à cet effet un procédé d'obtention d'une lentille ophtalmique, comportant :

- une étape de fourniture d'un palet fait dans une matière apte à être surfacée par usinage ; et
- une étape de surfaçage par usinage d'une face dudit palet comportant successivement une étape d'usinage d'une surface d'ébauche et une étape d'usinage d'une surface de finition, ladite étape d'usinage d'une surface d'ébauche étant mise en oeuvre avec une machine comportant un outil d'ébauche formant une surface d'ébauche présentant un sillon d'ébauche ayant un profil en arc de cercle dont le rayon de courbure est fixé par la forme de l'outil d'ébauche et ayant un pas défini par une consigne d'avance d'ébauche donnée à ladite machine ; ladite étape d'usinage d'une surface de finition étant mise en oeuvre avec une machine comportant un outil de finition formant une surface de finition en creusant ladite surface d'ébauche, sur une profondeur définie par une consigne de profondeur de passe de finition donnée à ladite machine, en formant un sillon de finition ayant un pas défini par une consigne d'avance de finition donnée à ladite machine ;
  caractérisé en ce que :
- ladite étape de fourniture d'un palet comporte l'étape de sélectionner pour ledit palet une dite matière qui présente un seuil d'apparition de piqûres lors d'une dite étape d'usinage d'une surface de finition sur une profondeur d'enlèvement de matière de 0,07 mm qui est d'au moins 15% plus élevée que le seuil d'apparition de piqûres lors d'une dite étape d'usinage d'une surface de finition sur une profondeur d'enlèvement de matière de 0,22 mm, chaque dit seuil d'apparition de piqûres étant la consigne d'avance de finition à partir de laquelle apparaissent des piqûres pour une profondeur d'enlèvement de matière prédéterminée, chaque dite profondeur d'enlèvement de matière étant la somme de la consigne de profondeur de passe de finition mise en oeuvre et de la rugosité d'ébauche B' donnée par la relation :

$$B' = \frac{C'^2}{8R'}$$

avec :

- C' qui est l'avance d'ébauche ou le pas du sillon d'ébauche ; et
- R' qui est le rayon de courbure de l'outil d'ébauche ou du sillon d'ébauche;
- ladite étape d'usinage d'une surface de finition comporte l'étape de sélectionner ladite consigne de profondeur de passe de finition entre 0,015 mm et 0,075 mm ; et
- ladite étape d'usinage d'une surface de finition comporte l'étape de sélectionner ladite consigne d'avance de finition entre 85 et 99% du seuil d'apparition de piqûres pour la profondeur d'enlèvement de matière donnée par la somme de la consigne de profondeur de passe de finition sélectionnée et de la rugosité d'ébauche B'.

L'invention est basée sur la découverte que pour certaines matières, lorsque la profondeur d'enlèvement de matière diminue, le seuil d'apparition de piqûres augmente ; et qu'en particulier pour certaines matières l'augmentation est d'au moins 15% lorsqu'on passe d'une profondeur d'enlèvement de matière de 0,22 mm à une profondeur d'enlèvement de matière de 0,07 mm.

L'invention est également basée sur l'observation que les principaux défauts qui doivent être enlevés lors de l'opération d'usinage d'une surface de finition, sont les fissures qui se créent au cours de l'opération d'usinage d'une surface d'ébauche sous la surface d'ébauche et qu'avec les machines d'usinage et outils d'ébauche actuels, une profondeur de passe de finition entre 0,015 mm et 0,075 mm, ce qui est bien plus petit que les profondeurs de passe utilisées classiquement, reste inférieure à la profondeur de fissures.

En choisissant ainsi une profondeur de passe particulièrement petite et en se plaçant aussi près que possible du seuil d'apparition de piqûres, l'étape d'usinage d'une surface de finition peut être mise en oeuvre dans un temps beaucoup plus petit, puisqu'il est d'au moins 15% inférieur aux étapes d'usinage d'une surface de finition conventionnelles.

Selon des caractéristiques préférées :

- ladite étape de fourniture d'un palet comporte l'étape de sélectionner pour ledit palet un Polythiourethane ;
- ledit Polythiourethane est le MR7 ;
- ladite étape d'usinage d'une surface de finition est mise en oeuvre avec un outil de finition configuré pour former un sillon de finition ayant un rayon de courbure compris entre 1,9 et 2,1 mm ; ladite consigne de profondeur de passe de finition est comprise entre 0,03 et 0,06 mm ; tandis que ladite consigne d'avance de finition est comprise entre 0,076 et 0,102 mm/tour ;
- ladite étape d'usinage d'une surface de finition est mise en oeuvre avec un outil de finition configuré pour former un sillon de finition ayant un rayon de courbure compris entre 4,9 et 5,1 mm; ladite consigne de profondeur de passe de finition est comprise entre 0,03 et 0,06 mm ; tandis que ladite consigne d'avance de finition est comprise entre 0,121 et 0,160 mm/tour ;
- ledit Polythiourethane est le MR8 ;
- ladite étape d'usinage d'une surface de finition est mise en oeuvre avec un outil de finition configuré pour former un sillon de finition ayant un rayon de courbure compris entre 1,9 et 2,1 mm ; ladite consigne de profondeur de passe de finition est comprise entre 0,03 et 0,06 mm ; tandis que ladite consigne d'avance de finition est comprise entre 0,055 et 0,074 mm/tour ; et/ou
- ladite étape d'usinage d'une surface de finition est mise en oeuvre avec un outil de finition configuré pour former un sillon de finition ayant un rayon de courbure compris entre 4,9 et 5,1 mm ; ladite consigne de profondeur de passe de finition est comprise entre 0,03 et 0,06 mm ; tandis que ladite consigne d'avance de finition est comprise entre 0,088 et 0,117 mm/tour.

Selon d'autres caractéristiques préférées, ladite étape d'usinage d'une surface d'ébauche et ladite étape d'usinage d'une surface de finition sont mises en oeuvre avec une même machine, et ladite étape d'usinage d'une surface d'ébauche comporte l'étape de sélectionner pour ladite consigne d'avance d'ébauche une valeur minimisant un temps total T de mise en oeuvre, par ladite machine, de l'étape d'usinage d'une surface d'ébauche et de l'étape d'usinage d'une surface de finition.

La mise en oeuvre de ces caractéristiques permet à l'étape de surfaçage du procédé selon l'invention d'être particulièrement rapide.

Selon des caractéristiques préférées, ladite étape de sélectionner pour ladite consigne d'avance d'ébauche une valeur minimisant un temps total T comporte :

- l'étape de modéliser le temps total T par la relation :

$$T = K1 + \frac{K2}{C'} + \frac{K3}{C}$$

avec :

- K1 qui est une constante regroupant les temps passés par la machine pour d'autres opérations que l'étape d'usinage d'une surface d'ébauche et l'étape d'usinage d'une surface de finition ;
- K2 qui est une constante liée à l'étape d'usinage d'une surface d'ébauche ;
- K3 qui est une constante liée à l'étape d'usinage d'une surface de finition ; et
- C qui est l'avance d'ébauche ou le pas du sillon de finition ;

- l'étape de calculer pour chacune de n valeurs de consigne d'avance d'ébauche, le temps total d'usinage T respectif, avec pour chaque i-ième consigne d'avance d'ébauche, pour i pris parmi 1 à n, la i-ième consigne d'avance de finition calculée par mise en oeuvre de ladite étape de sélectionner la consigne d'avance de finition, en prenant la profondeur d'enlèvement de matière donnée par la somme de la consigne de profondeur de passe de finition sélectionnée et de la rugosité d'ébauche B' correspondant à la i-ième consigne d'avance d'ébauche ; et
- l'étape de sélectionner comme consigne d'avance d'ébauche la m-ième consigne d'avance d'ébauche et comme consigne d'avance de finition la m-ième consigne d'avance de finition, avec m qui est le i pour lequel le temps total T est le plus petit.

Selon des caractéristiques préférées, ladite étape d'usinage d'une surface d'ébauche est mise en oeuvre avec un outil d'ébauche configuré pour former un sillon d'ébauche ayant un rayon de courbure compris entre 33 et 34 mm ; tandis que ladite consigne d'avance d'ébauche est comprise entre 1,16 et 5,18 mm/tour.

Selon d'autres caractéristiques préférées, comme étant simples et commodes à mettre en oeuvre, ledit sillon d'ébauche et ledit sillon de finition sont en spirale.

BREVE DESCRIPTION DES DESSINS

L'exposé de l'invention sera maintenant poursuivi par la description détaillée d'exemples de réalisation, donnée ci-après à titre illustratif et non limitatif, en référence aux dessins annexés. Sur ces dessins :

- la figure 1 est une vue de face d'un outil de finition et d'un porte-outil que comporte une machine d'usinage d'une face d'un palet en matière organique prévu pour devenir après usinage une lentille ophtalmique ;
- la figure 2 est une vue montrant l'outil de finition suivant la coupe illustrée par II-II sur la figure 1, en cours d'usinage d'une face du palet ;
- la figure 3 est une vue très schématique montrant le sillon creusé par l'outil de finition sur cette face du palet ;
- la figure 4 est une vue prise comme repéré par IV-IV sur la figure 3, la ligne du bas illustrant schématiquement la surface après usinage, la ligne du haut illustrant la surface initiale de cette face du palet en supposant qu'elle est uniforme ;
- la figure 5 est une vue très schématique d'une machine d'usinage configurée pour opérer sur une face d'un palet une étape de surfaçage comportant successivement une étape d'usinage d'une surface d'ébauche et une étape d'usinage d'une surface de finition ;
- la figure 6 est une vue semblable à la figure 4, mais avec la ligne du haut qui représente une surface d'ébauche formée par un outil d'ébauche ;
- la figure 7 est un graphe sur lequel est portée en abscisses la profondeur d'enlèvement de matière lors d'un surfaçage avec l'outil de finition tandis qu'est portée en ordonnées la consigne d'avance de finition, ce graphe représentant la courbe de seuil d'apparition de piqûres pour la matière MR7 ;
- la figure 8 est un graphe semblable au graphe de la figure 7, mais pour la matière CR39, avec des échelles différentes en abscisses et en ordonnées ;
- la figure 9 est un graphe semblable à la partie inférieure de la figure 7, mais avec les ordonnées qui sont dilatées et avec l'ajout de la courbe de seuil pratique avant apparition de piqûres ;
- la figure 10 est un graphe sur lequel est portée en abscisses la consigne d'avance d'ébauche et en ordonnées le temps total de mise en oeuvre de l'étape d'usinage d'une surface d'ébauche et de l'étape d'usinage d'une surface de finition, la courbe du haut étant établie pour des étapes d'usinage d'une surface de finition invariables, les autres courbes étant établies pour des étapes d'usinage d'une surface de finition conformes à l'invention, pour différentes valeurs de profondeur de passe de finition ; et
- la figure 11 est un graphe semblable à la figure 9, mais pour la matière MR8.

DESCRIPTION DETAILLEE D'EXEMPLES DE REALISATION

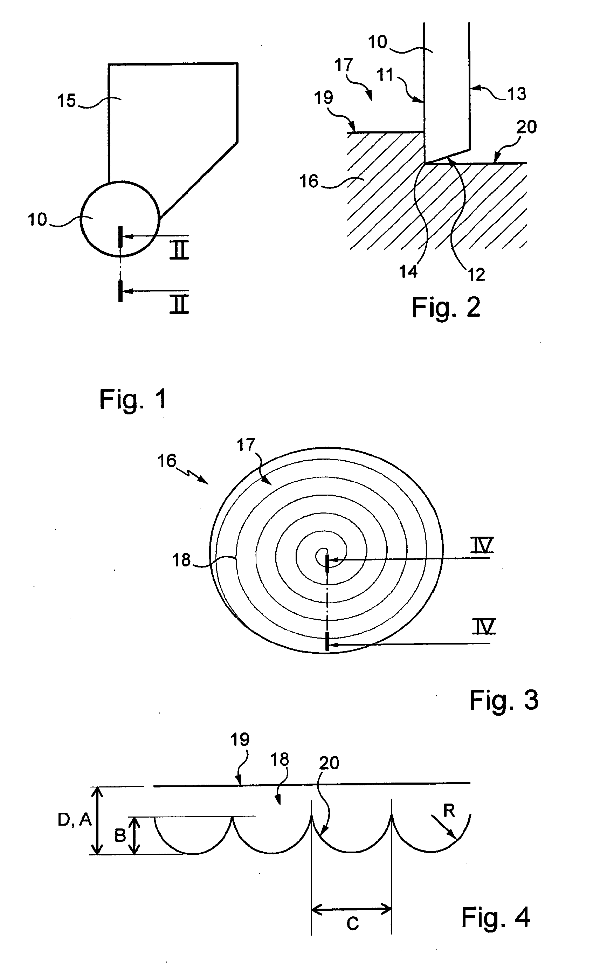

L'outil de finition 10 illustré sur la figure 1 et la machine d'usinage dont il fait partie sont ici tels que décrits dans la demande internationale WO 2006/097607, à laquelle correspond la demande de brevet américain US 2009/0022554.

L'outil de finition 10 est de forme générale circulaire. Il présente une face d'attaque 11, une face de dépouille 12 et une face arrière 13. La jonction entre la face d'attaque 11 et la face de dépouille 12 forme une arête de coupe 14.

L'outil 10 est fixé sur un porte-outil 15 de manière que l'arête de coupe 14 soit disponible sur au moins une partie de la circonférence de l'outil 10 pour l'usinage d'un palet 16 (figures 2 et 3) prévu pour devenir après usinage de sa face 17, une lentille ophtalmique.

La machine dont fait partie l'outil de finition 10 est configurée pour entraîner à rotation le palet 16 et pour entraîner à coulissement l'outil 10 suivant une direction parallèle à l'axe autour duquel est entraîné à rotation le palet 16 et suivant une direction transversale à cet axe de rotation.

Les organes d'entraînement à coulissement de l'outil suivant ces deux directions sont synchronisés avec l'organe d'entraînement à rotation du palet afin de pouvoir usiner une surface complexe, notamment l'une des faces d'un verre de lunettes pour porteur myope, astigmate et presbyte.

La figure 2 montre l'outil 10 en train d'usiner la face 17 du palet 16 : l'outil 10 pénètre dans la matière du palet 16 sur une profondeur définie par une consigne de profondeur de passe donnée à la machine, la face 16 étant usinée avec la face d'attaque 11 de l'outil 10 qui produit des copeaux par son avancée dans la matière.

Plus précisément, l'outil 10 creuse un sillon 18 (figures 3 et 4) en spirale ayant un pas défini par une consigne d'avance donnée à la machine.

Sur la figure 3, le sillon 18 est représenté de façon très schématique par ses lignes de fond.

On notera que pour simplifier les dessins, le sillon 18 a été représenté sur la figure 3 avec un nombre de tours bien plus petit que le sillon formé en pratique par l'outil de finition 10.

Les figures 2 et 4 montrent la surface 19 initiale de la face 17 du palet 16 et la surface 20 après usinage par l'outil de finition 10.

On notera qu'en pratique l'étape de surfaçage de la face 17 comporte successivement une étape d'usinage d'une surface d'ébauche avec un outil d'ébauche et une étape d'usinage d'une surface de finition avec l'outil de finition, mais qu'ici, pour simplifier les explications, on suppose dans un premier temps que l'usinage de la face 17 du palet 16 a été effectué avec l'outil de finition 10 sur une surface initiale 19 uniforme.

Du fait de la forme générale circulaire de l'outil de finition 10, le sillon 18 a un profil en arc de cercle dont le rayon de courbure R est fixé par la forme de l'outil 10. Ici, l'outil 10 étant de forme générale circulaire, le rayon de courbure R du sillon 18 est le rayon de l'outil 10.

Sur la figure 4, en outre des lignes illustrant les surfaces 19 et 20, on a représenté la profondeur de passe A, la rugosité B et le pas C du sillon 18.

Ainsi qu'indiqué ci-dessus, le pas C est défini par une consigne d'avance donnée à la machine (la consigne d'avance est C/tour) pour l'outil 10, c'est-à-dire la consigne d'avance de finition.

La rugosité B est ici l'écart entre les fonds et les sommets du sillon 18. On démontre qu'il existe entre le pas C, le rayon de courbure R et la rugosité B la relation suivante :

$$C = 2\sqrt{R^2 - (R - B)^2}$$

Si on néglige le terme $B^2$, on a la relation :

$$B = \frac{C^2}{8R}$$

Comme indiqué ci-dessus, l'outil 10 pénètre dans la matière du palet 16 sur une profondeur définie par une consigne de profondeur de passe donnée à la machine d'usinage.

Du fait de la forme circulaire de l'outil 10, la profondeur creusée sous la surface initiale 19 est variable.

Pour des raisons expliquées ci-après, il y a lieu de distinguer :

- la profondeur de passe A qui est l'écart entre la surface de référence de départ dont a connaissance la machine et la surface cible qu'il est prévu d'usiner ; et
- la profondeur d'enlèvement de matière D qui est l'écart maximal entre la surface réelle de départ et la surface réelle après usinage.

Ici, comme la surface 19 initiale est supposée uniforme, la surface de référence de départ et la surface réelle de départ sont confondues ; et la surface cible qu'il est prévu d'usiner est la surface qui passe par les lignes de fond du sillon 18 ; par conséquent la profondeur de passe A est égale à la profondeur d'enlèvement de matière D.

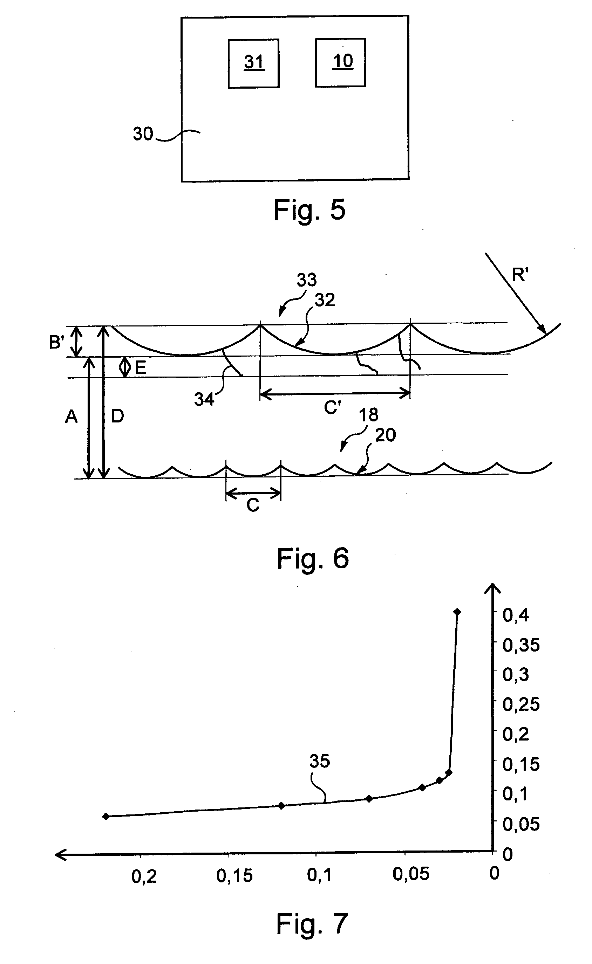

La machine 30 illustrée très schématiquement sur la figure 5 est configurée pour opérer en totalité l'étape de surfaçage par usinage de la face 17 du palet 16, en effectuant successivement une étape d'usinage d'une surface d'ébauche avec un outil d'ébauche 31 et une étape d'usinage d'une surface de finition avec l'outil de finition 10.

La machine 30 comporte un même organe d'entraînement à rotation du palet 16 pour effectuer l'étape d'usinage d'une surface d'ébauche et l'étape d'usinage d'une surface de finition, le palet 16 restant en place sur cet organe entre une étape de chargement effectuée avant l'étape d'usinage d'une surface d'ébauche et une étape de déchargement effectué après l'étape d'usinage d'une surface de finition.

La machine 30 comporte pour l'outil d'ébauche 31 des organes d'entraînement distincts des organes d'entraînement de l'outil de finition 10. La cinématique mise en oeuvre lors de l'étape d'usinage d'une surface d'ébauche est semblable à la cinématique mise en oeuvre lors de l'étape d'usinage d'une surface de finition. Ici, en outre, l'outil d'ébauche 31 tourne sur lui-même. L'outil d'ébauche 31 est par exemple une fraise rotative telle que décrite dans le brevet américain 5,938,381.

Ainsi, l'outil d'ébauche forme une surface d'ébauche 32 (figure 6) présentant un sillon d'ébauche 33 en spirale ayant un profil en arc de cercle dont le rayon de courbure est fixé par la forme de l'outil d'ébauche et ayant un pas défini par une consigne d'avance d'ébauche donnée à la machine 30.

Sur la figure 6, en outre des lignes illustrant la surface d'ébauche 32 et la surface de finition 20, on a représenté la profondeur de passe de finition A, la profondeur d'enlèvement de matière D, la rugosité B', le pas C' et le rayon de courbure R' du sillon d'ébauche 33.

Le rayon de courbure R' et le pas C' (et donc la consigne d'avance d'ébauche) sont bien plus importants que le rayon de courbure R et le pas C du sillon de finition 18.

La rugosité B' du sillon d'ébauche 33 est donnée par la relation :

$$B' = \frac{C'^2}{8R'}$$

La profondeur de passe de finition A, qui est égale à la consigne de profondeur de passe de finition donnée à la machine 30, est l'écart entre la surface cible de l'étape d'usinage d'une surface d'ébauche (qui devient la surface de référence de départ dont a connaissance la machine pour l'étape d'usinage d'une surface de finition) et la surface cible de l'étape d'usinage d'une surface de finition.

Il s'agit en pratique de l'écart entre la surface qui passe par les lignes de fond du sillon d'ébauche 33 et de la surface qui passe par les lignes de fond du sillon de finition 18.

La profondeur d'enlèvement de matière D est l'écart maximum pouvant exister entre le sillon d'ébauche 33 et le sillon de finition 18. Il s'agit en pratique de l'écart entre les fonds du sillon 18 et les crêtes du sillon 33.

Comme on le voit sur la figure 6, la profondeur d'enlèvement de matière D est la somme de la profondeur de passe A et de la rugosité d'ébauche B'.

On sait que les principaux défauts susceptibles d'apparaître sur la surface 20 usinée par l'outil de finition 10, c'est-à-dire la surface de finition, sont des éclats ou arrachements de matière, généralement appelés piqûres.

Les piqûres apparaissent lorsque la profondeur d'enlèvement de matière devient trop importante.

Il est à noter que les travaux dont est issue la présente invention ont établi qu'il n'est pas suffisant de prendre en compte la seule profondeur de passe A mais qu'il faut aussi faire intervenir la rugosité d'ébauche B' pour prendre en compte le phénomène physique réel, qui est lié à la profondeur d'enlèvement de matière D.

La courbe 35 de la figure 7 représente le seuil d'apparition de piqûres pour la matière MR7. En abscisses est portée la profondeur d'enlèvement de matière D, exprimée en mm. En ordonnées est portée la consigne d'avance de finition, exprimée en mm/tour.

Cette courbe a été établie dans les conditions expérimentales prédéfinies : ici, la surface d'ébauche cible (qui passe par les lignes de fond du sillon 33) est un plan et la surface de finition cible (qui passe par les lignes de fond du sillon 18) est un plan parallèle à la surface d'ébauche cible ; la rugosité B' de la surface d'ébauche 32 est fixée à 0,02 mm, le rayon de courbure R de l'outil de finition 10 et donc du sillon de la surface de finition 20 est de 2 mm avec un angle de coupe (inclinaison de la face d'attaque 11 par rapport à la normale de la surface à usiner) qui est nul, comme montré sur la figure 2. Les différents essais ont été effectués sur la même machine avec les mêmes outils d'ébauche 31 et de finition 10.

On constate, et c'est une découverte sur laquelle est basée la présente invention, que lorsque la profondeur d'enlèvement de matière diminue, le seuil d'apparition de piqûres augmente très sensiblement.

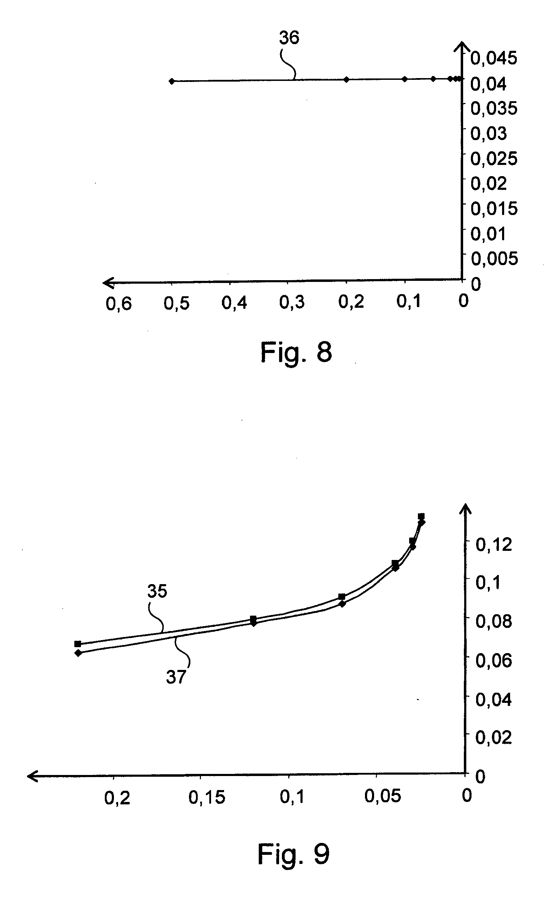

Pour permettre les comparaisons, la courbe 36 illustrée sur la figure 8 a été établie de la même façon que la courbe 35, mais pour la matière CR39. On constate que le seuil d'apparition de piqûres ne varie pas avec la profondeur d'enlèvement de matière, le seuil restant à 0,04 mm/tour entre une profondeur d'enlèvement de matière de 0,5 mm et une profondeur d'enlèvement de matière très proche de 0.

En pratique, dans les laboratoires de fabrication de lentilles ophtalmiques, on utilise pour la matière CR39 une consigne d'avance de finition de 0,033 mm/tour quelle que soit la consigne de profondeur de passe de finition, laquelle est en général de 0,2 mm.

Ainsi qu'on le voit mieux sur la figure 9, qui reprend la partie de la courbe 35 que l'on voit en bas sur la figure 7 avec les ordonnées qui sont dilatées, pour une profondeur d'enlèvement de matière de 0,22 mm, le seuil d'apparition de piqûres est d'environ 0,069 mm/tour tandis que pour une profondeur d'enlèvement de matière de 0,07 mm, le seuil d'apparition de piqûres est d'environ 0,091 mm/tour.

Le seuil pour 0,07 mm est ainsi de 32% plus élevé que le seuil pour 0,22 mm.

La courbe 37 de la figure 9 donne le seuil pratique avant apparition de piqûres, c'est-à-dire la courbe donnant les valeurs maximales de consigne d'avance de finition que l'on peut utiliser en pratique.

D'une façon générale, pour les valeurs d'avance de finition à partir de la courbe 35, l'on est sûr qu'il y a des piqûres ; pour les valeurs d'avance de finition jusqu'à la courbe 37, l'on est sûr qu'il n'y a pas de piqûres ; et pour les valeurs d'avance de finition entre la courbe 37 et la courbe 35, les piqûres peuvent ou non apparaître.

Le décalage entre la courbe 35 de seuil d'apparition de piqûres et la courbe 37 de seuil pratique avant apparition de piqûres, dépend de la précision de la machine utilisée et de la marge d'usure que l'on prévoit pour l'outil de finition (cette marge d'usure est liée à la fréquence de renouvellement de l'outil).

Dans l'exemple illustré, la machine est d'une bonne précision et l'outil de finition 10, en diamant, est changé après avoir usiné la surface de finition de mille lentilles ophtalmiques.

Le décalage entre les courbes 35 et 37 n'est pas constant car il dépend également de la quantité de piqûres qui apparaît : plus il ya piqûres plus le décalage est important.

Pour une profondeur d'enlèvement de matière de 0,22 mm, le seuil pratique avant apparition de piqûres est de 0,063 mm/tour tandis que pour une profondeur d'enlèvement de matière de 0,07 mm, le seuil pratique avant apparition de piqûres est de 0,087 mm/tour.

Le seuil pour 0,07 mm est ainsi de 38% plus élevé que le seuil pour 0,22 mm.

Les valeurs suivantes ont été également trouvées par les essais à la base de la présente invention :

| Profondeur d'enlèvement de matière (mm) | Seuil d'apparition de piqûres (mm/tour) | Seuil pratique avant apparition de piqûres (mm/tour) |
|:---:|:---:|:---:|
| 0,035 | 0,112 | 0,111 |
| 0,060 | 0,093 | 0,091 |
| 0,080 | 0,090 | 0,082 |
| 0,095 | 0,086 | 0,078 |

On notera qu'il était jusqu'ici considéré que les différentes matières organiques dans lesquelles sont faites les lentilles ophtalmiques ont un comportement semblable à la matière CR39 en ce qui concerne l'usinage d'une surface de finition ; qu'en conséquence il a été jusqu'ici considéré que pour la matière MR7 le seuil d'apparition de piqûres est indépendant de la consigne de profondeur de passe ; et que la consigne classique d'avance de finition de 0,063 mm/tour doit être utilisée quelle que soit la profondeur de passe de finition, laquelle est fixée en général, de même que pour la matière CR39, à 0,20 mm.

En réalité, comme le montre la découverte à la base de la présente invention, pour la matière MR7, l'on peut augmenter de façon très substantielle l'avance de finition, et donc réaliser plus rapidement l'étape d'usinage d'une surface de finition, en réduisant la profondeur de passe.

Les contraintes qui sont alors à respecter sont les suivantes :

(i) la profondeur de passe doit être suffisamment grande pour éliminer les défauts liés à l'usinage d'une surface d'ébauche ; et
(ii) l'avance de finition ne doit pas dépasser le seuil pratique avant apparition de piqûres.

La contrainte (ii) est satisfaite lorsque l'on choisit les valeurs données par la courbe 37.

En ce qui concerne la contrainte (i), il faut savoir qu'au cours de l'opération d'usinage d'une surface d'ébauche, il se crée sous la surface d'ébauche 32 des fissures 34 qui se propagent jusqu'à une profondeur E sous la surface 32, et plus précisément sous les fonds du sillon 33.

Les fissures 34 sont les principaux défauts qui doivent être enlevés lors de l'opération d'usinage d'une surface de finition. Il faut également permettre de rattraper les légères différences de forme susceptibles d'apparaître entre la surface cible d'ébauche et la surface passant par les lignes de fond du sillon 33.

Traditionnellement, pour la matière CR39, la profondeur de passe A est choisie égale 0,20 mm, ce qui est considérablement plus grand que la profondeur de fissures E.

Ici, pour la matière MR7, la profondeur de passe A est choisie proche de la profondeur de fissures E. En l'occurrence la profondeur de passe A, définie par la consigne de profondeur de passe de finition donnée à la machine 30, est choisie entre 0,015 mm et 0,075 mm.

D'une façon générale, pour une machine de bonne précision avec l'outil d'ébauche 31 qui est une fraise rotative dont le rayon de courbure R' est de 30 mm, avec l'avance d'ébauche qui est de 2,19 mm/tour (la rugosité D' est alors de 0,02 mm), une profondeur de passe de 0,05 mm est une valeur qui convient.

A cette profondeur de passe A de 0,05 mm correspond une profondeur d'enlèvement de matière D de 0,07 mm dans les conditions d'expérimentation choisies, où la rugosité B' est de 0,02 mm.

La valeur maximum pour l'avance de finition, donnée par la courbe 37 de la figure 9, est alors de 0,087 mm/tour.

Si l'on prend l'exemple, pour un palet 16 ayant un diamètre de 70 mm, de l'usinage sur la face 17 du palet 16 d'une surface torique dont les rayons de courbure sont de 80 mm et de 300 mm, le temps d'usinage (étape d'usinage d'une surface d'ébauche et étape d'usinage d'une surface de finition) est de 42,6 s lorsque l'on utilise pour l'étape d'usinage d'une surface de finition les paramètres classiques de 0,20 mm pour la profondeur de passe et de 0,063 mm/tour pour l'avance de finition ; alors qu'avec les paramètres susmentionnés (profondeur de passe de 0,05 mm et avance de finition de 0,087 mm/tour), le temps total d'usinage est de 35,2 s, soit une diminution de 17% (dans les deux cas, l'on a gardé les mêmes paramètres pour l'étape d'usinage d'une surface d'ébauche, notamment une avance d'ébauche de 2,19 mm/tour).

Pour minimiser encore le temps de mise en oeuvre de l'opération d'usinage d'une surface de finition, l'on peut également diminuer la rugosité d'ébauche B' en agissant sur la valeur d'avance d'ébauche, c'est-à-dire sur le pas C' du sillon d'ébauche 33.

Comme le montre la formule rappelée ci-dessus, la rugosité d'ébauche B' varie comme le carré de l'avance d'ébauche ou du pas C'.

La diminution du temps de mise en oeuvre de l'étape d'usinage d'une surface de finition offerte par la diminution de la rugosité d'ébauche B' a pour conséquence une augmentation du temps de réalisation de l'étape d'usinage d'une surface d'ébauche puisque l'avance d'ébauche est diminuée.

On va maintenant décrire une méthode permettant de trouver quelle est l'avance d'ébauche pour laquelle le temps total d'usinage (étape d'usinage d'une surface d'ébauche et étape d'usinage d'une surface de finition) est minimisé.

Le temps total est modélisé par la relation suivante :

$$T = K1 + \frac{K2}{C'} + \frac{K3}{C}$$

Avec:

- K1 qui est une constante regroupant les temps passés par la machine 30 pour d'autres opérations que l'étape d'usinage d'une surface d'ébauche et l'étape d'usinage d'une surface de finition ;
- K2 qui est une constante liée à l'étape d'usinage d'une surface d'ébauche ; et
- K3 qui est une constante liée à l'étape d'usinage d'une surface de finition.

Il est à noter que la constante K3 dépend de la géométrie de la surface à usiner : elle sera d'autant plus grande que la surface est complexe.

Il est également à noter que les constantes K2 et K3 dépendent du diamètre du palet 16.

Pour connaître les constantes K1, K2 et K3, on réalise des relevés à vide sur la machine 30, en lui donnant pour chaque relevé le même diamètre pour le palet 16 et la même géométrie de surface à réaliser.

On réalise par exemple les relevés de temps à vide avec les essais suivants :

- avance d'ébauche standard et avance de finition standard ;
- avance d'ébauche multipliée par 2 et avance de finition standard ; et
- avance d'ébauche standard et avance de finition multipliée par 2.

Par résolution d'un système linéaire simple de trois équations (une par essai) à trois inconnues (les constantes K1, K2 et K3), les constantes K1, K2 et K3 peuvent être déterminées.

On calcule alors le temps total d'usinage T, pour un certain nombre de valeurs d'avance d'ébauche, en prenant la même profondeur de passe A, choisie comme expliqué ci-dessus, c'est-à-dire aussi proche que possible de la profondeur de fissures E.

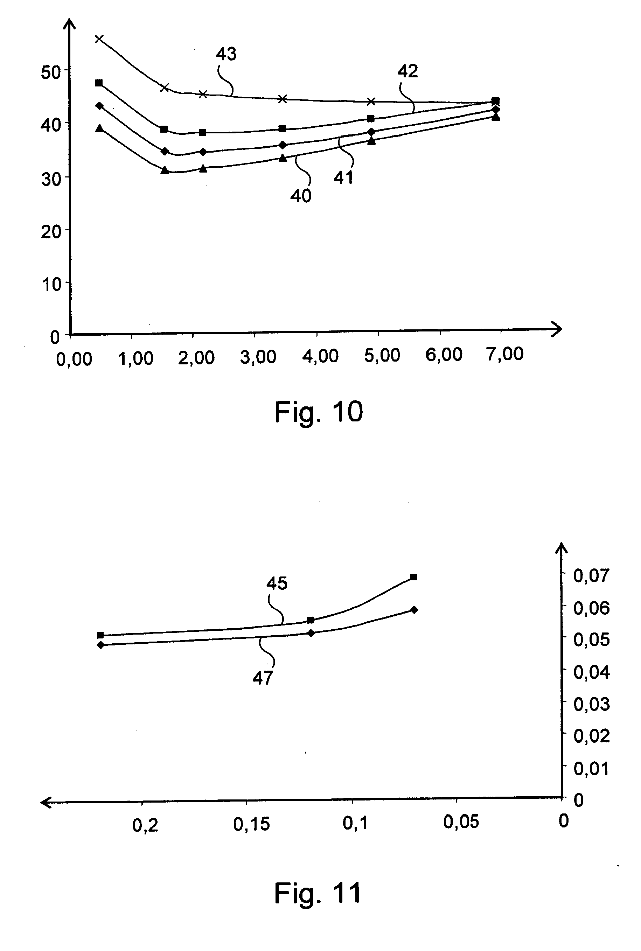

Sur le graphe de la figure 10, est porté en abscisses l'avance d'ébauche et en ordonnées le temps total T.

Les courbes 40, 41 et 42 ont été établies respectivement pour une profondeur de passe de finition A de 0,02 mm, de 0,05 mm et de 0,10 mm.

Les valeurs d'avance d'ébauche prises sont, par exemple, comme montré sur la figure 10 : 0,5 mm/tour, 1,5 mm/tour, 2,2 mm/tour, 3,5 mm/tour, 4,9 mm/tour et 6,9 mm/tour.

Pour chaque valeur d'avance d'ébauche prise, on a déterminé, à partir du rayon de courbure R' et de la relation donnée ci-dessus, la rugosité d'ébauche B'.

La somme de la rugosité d'ébauche B' et de la profondeur de passe A donne la profondeur d'enlèvement de matière D.

A partir de la profondeur d'enlèvement de matière D, on a déterminé avec la courbe 37 de la figure 9, l'avance de finition.

L'avance de finition étant ainsi déterminée, on calcule avec la relation ci-dessus le temps total d'usinage T.

On voit sur la figure 10 que pour la courbe 40 (profondeur de passe de finition A de 0,02 mm), le temps total d'usinage T le plus petit est pour la valeur d'avance d'ébauche est de 1,5 mm/tour ; et que pour les courbes 41 et 42 (profondeur de passe de finition A respectivement de 0,05 mm et de 0,10 mm), le temps total T le petit est pour la valeur d'avance d'ébauche de 2,2 mm/tour.

Une première approche consiste à sélectionner la valeur d'avance d'ébauche pour laquelle le temps total T est le plus petit (1,55 mm/tour pour la courbe 40 et 2,2 mm/tour pour les courbes 41 et 42) et de prendre la valeur d'avance de finition correspondante.

Une autre approche consiste à poursuivre les calculs, en prenant de nouvelles valeurs proches de la valeur pour laquelle le temps total T est le plus petit, afin d'affiner la détermination de la valeur d'avance d'ébauche optimale.

Ici, l'on trouve pour la courbe 41 (profondeur de passe de finition A de 0,05 mm) un minimum pour le temps total d'usinage T à la valeur d'avance d'ébauche de 1,90 mm/tour.

La valeur correspondante de l'avance de finition est alors de 0,090 mm/tour.

Si l'on reprend l'exemple, pour un palet 16 de 70 mm de diamètre, du surfaçage de la face 17 pour obtenir une surface torique dont les rayons de courbure sont de 80 mm et de 300 mm, pour lequel il a été vu ci-dessus que le temps total d'usinage avec les paramètres conventionnels est de 42,6 s (valeur d'avance d'ébauche de 2,19 mm/tour, profondeur de passe de finition A de 0,20 mm et avance de finition de 0,063 mm/tour) tandis que le temps total d'usinage avec action sur la seule étape d'usinage d'une surface de finition est de 35,2 s (avance d'ébauche de 2,19 mm/tour, profondeur de passe de finition A de 0,05 mm et avance de finition de 0,087 mm/tour), l'on a avec les valeurs optimisées (avance d'ébauche de 1,90 mm/tour et avance de finition de 0,090 mm/tour) un temps total d'usinage T de 34,8 s.

Pour permettre de comparer, la courbe 43 de la figure 10 donne le temps total d'usinage en gardant la profondeur de passe de finition et l'avance de finition susmentionnées (respectivement 0,05 mm et 0,087 mm/tour). On voit que dans ce cas, le temps total diminue régulièrement avec l'avance d'ébauche, sans passer par un minimum, et qu'il est toujours supérieur au temps total T correspondant à la même profondeur de passe de finition (courbe 41).

On notera que d'autres essais ont été effectués avec un outil d'ébauche 31 configuré pour former un sillon d'ébauche ayant un rayon de courbure légèrement plus grand, à savoir 33,5 mm au lieu de 30 mm ; et que l'on trouve alors le temps total T le plus petit pour une valeur d'avance d'ébauche de 1,94 mm/tour avec le temps total d'usinage T qui est alors de 34,1 s.

D'une façon générale, pour un outil d'ébauche configuré pour former un sillon d'ébauche ayant un rayon de courbure R' compris entre 33 et 34 mm, il est intéressant d'utiliser des consignes d'avance d'ébauche comprises entre 1,16 et 5,18 mm/tour.

La figure 11 est un graphe semblable à la figure 9, mais pour la matière MR8.

La courbe 45 représente le seuil d'apparition des piqûres tandis que la courbe 47 représente le seuil pratique avant apparition de piqûres.

Pour une profondeur d'enlèvement de matière de 0,22 mm, le seuil d'apparition de piqûres est de 0,052 mm/tour et le seuil pratique avant apparition de piqûres est de 0,049 mm/tour tandis que pour une profondeur d'enlèvement de matière de 0,07 mm, le seuil d'apparition de piqûres est de 0,069 mm/tour et le seuil pratique avant apparition de piqûres est de 0,059 mm/tour.

Le seuil d'apparition de piqûres pour 0,07 mm est ainsi de 33% plus élevé que le seuil pour 0,22 mm.

Le seuil pratique avant apparition de piqûres pour 0,07 mm est de 20% plus élevé que le seuil pratique avant apparition de piqûres pour 0,22 mm.

Les valeurs suivantes ont également été trouvées par les essais à la base de la présente invention :

| Profondeur d'enlèvement de matière (mm) | Seuil d'apparition de piqûres (mm/tour) | Seuil pratique avant apparition de piqûres (mm/tour) |
|---|---|---|
| 0,035 | 0,083 | 0,066 |
| 0,060 | 0,072 | 0,060 |
| 0,080 | 0,065 | 0,057 |
| 0,095 | 0,061 | 0,055 |

Dans les exemples décrits, la matière dont est faite le palet 16 est du MR7 ou du MR8, pour lesquelles il a été constaté que le seuil d'apparition de piqûres augmente sensiblement lorsqu'on diminue la profondeur d'enlèvement de matière. En variante, la matière est différente du MR7 ou du MR8, par exemple un autre Polythiourethane ou une autre matière organique ou non.

Les conditions expérimentales dans lesquelles ont été établies les courbes de seuil d'apparition de piqûres comportent l'usinage d'une surface d'ébauche cible qui est un plan et une étape d'usinage d'une surface de finition cible qui est un plan parallèle à la surface d'ébauche cible. En variante, les surfaces cible sont différentes de plans, par exemple des sphères parallèles.

Dans les exemples décrits ci-dessus, l'outil de finition 10 a un rayon de courbure de 2 mm. En variante, ce rayon de courbure est différent, par exemple de 5, de 7 ou de 12 mm.

On notera qu'avec un rayon de courbure plus grand, la courbe de seuil d'apparition de piqûres est décalée vers le haut, c'est-à-dire que pour une même profondeur de passe, le seuil d'apparition de piqûres est plus haut. Il est donc possible, en augmentant le rayon de courbure de l'outil de finition, d'augmenter l'avance de finition et donc de diminuer le temps de mise en oeuvre de l'étape d'usinage d'une surface de finition.

Par exemple, pour la matière MR7, si l'on prend un outil de finition dont le rayon de courbure est de 5 mm, on a les valeurs suivantes :

| Profondeur d'enlèvement de matière (mm) | Seuil d'apparition de piqûres (mm/tour) | Seuil pratique avant apparition de piqûres (mm/tour) |
|---|---|---|
| 0,035 | 0,177 | 0,176 |
| 0,060 | 0,152 | 0,148 |
| 0,080 | 0,142 | 0,134 |
| 0,095 | 0,137 | 0,131 |

Pour la matière MR7, si l'on prend un outil de finition dont le rayon de courbure est de 7 mm, on a les valeurs suivantes :

| Profondeur d'enlèvement de matière (mm) | Seuil d'apparition de piqûres (mm/tour) | Seuil pratique avant apparition de piqûres (mm/tour) |
|---|---|---|
| 0,035 | 0,210 | 0,208 |
| 0,060 | 0,180 | 0,175 |
| 0,080 | 0,168 | 0,158 |
| 0,095 | 0,162 | 0,155 |

Pour la matière MR8, si l'on prend un outil de finition dont le rayon de courbure est de 5 mm, on a les valeurs suivantes :

| Profondeur d'enlèvement de matière (mm) | Seuil d'apparition de piqûres (mm/tour) | Seuil pratique avant apparition de piqûres (mm/tour) |
|---|---|---|
| 0,035 | 0,126 | 0,103 |
| 0,060 | 0,113 | 0,095 |

(suite)

| Profondeur d'enlèvement de matière (mm) | Seuil d'apparition de piqûres (mm/tour) | Seuil pratique avant apparition de piqûres (mm/tour) |
|---|---|---|
| 0,080 | 0,103 | 0,089 |
| 0,095 | 0,097 | 0,087 |

Pour la matière MR8, si l'on prend un outil de finition dont le rayon de courbure est 7 mm, on a les valeurs suivantes :

| Profondeur d'enlèvement de matière (mm) | Seuil d'apparition de piqûres (mm/tour) | Seuil pratique avant apparition de piqûres (mm/tour) |
|---|---|---|
| 0,035 | 0,149 | 0,122 |
| 0,060 | 0,133 | 0,113 |
| 0,080 | 0,122 | 0,105 |
| 0,095 | 0,115 | 0,103 |

Dans les exemples décrits ci-dessus, l'angle de coupe est nul. En variante, l'angle de coupe est différent, en particulier négatif.

On notera qu'avec un angle de coupe négatif, les valeurs de seuil d'apparition de piqûres sont plus élevées.

Dans les exemples décrits ci-dessus, l'arête de coupe 14 (figure 2) de l'outil de finition est brute. En variante, il existe une facette inclinée, comme décrit dans la demande internationale WO 2006/097607. Avec une telle facette inclinée, le seuil d'apparition de piqûres est plus élevé.

D'une façon générale, les essais à la base de la présente invention ont montré que les valeurs du seuil pratique avant apparition de piqûres sont comprises entre 85 et 99% des valeurs du seuil d'apparition de piqûres.

En pratique, les valeurs intéressantes pour la consigne de profondeur de passe A sont comprises entre 0,015 mm et 0,075 mm (profondeur d'enlèvement de matière D comprise entre 0, 035 mm et 0,095 mm si la rugosité d'ébauche B' est de 0,02 mm) ; et plus spécialement les consignes de profondeur de passe de finition comprises entre 0,03 et 0,06 mm.

Avec cette dernière plage de consigne de profondeur de passe de finition A, les plages d'avance de finition qui conviennent sont les suivantes :

- 0,076 à 0,102 mm/tour pour la matière MR7 et un rayon de courbure R compris entre 1,9 et 2,1 mm ;
- 0,121 à 0,160 mm/tour pour la matière MR7 avec un rayon de courbure R compris entre 4,9 et 5,1 mm ;
- 0,055 à 0,074 mm/tour pour la matière MR8 et un rayon de courbure R compris entre 1,9 et 2,1 mm ; et
- 0,088 à 0,117 mm/tour pour la matière MR8 avec un rayon de courbure R compris entre 4,9 et 5,1 mm.

D'une façon générale, les essais à la base de la présente invention ont montré que les matières intéressantes pour réduire la durée de l'étape de surfaçage sont les matières pour lesquelles le seuil d'apparition de piqûres lors de l'étape d'usinage d'une surface de finition sur une profondeur d'enlèvement de matières de 0,07 mm est d'au moins 15% plus élevée que le seuil d'apparition de piqûres lors d'une étape d'usinage d'une surface de finition sur une profondeur d'enlèvement de matières de 0,22 mm. En principe, ce ratio d'au moins 15% est susceptible d'atteindre 200%.

Dans les exemples décrits ci-dessus, le sillon d'ébauche et le sillon de finition sont en spirale. En variante, les sillons sont en lignes droites parallèles espacées les unes des autres d'un pas défini par la consigne d'avance d'ébauche ou d'avance de finition donnée à la machine.

De nombreuses autres variantes sont possibles en fonction des circonstances, et l'on rappelle à cet égard que l'invention ne se limite pas aux exemples décrits et représentés.

**Revendications**

1. Procédé d'obtention d'une lentille ophtalmique, comportant :

- une étape de fourniture d'un palet (16) fait dans une matière apte à être surfacée par usinage ; et

- une étape de surfaçage par usinage d'une face (17) dudit palet (16) comportant successivement une étape d'usinage d'une surface d'ébauche (32) et une étape d'usinage d'une surface de finition (20), ladite étape d'usinage d'une surface d'ébauche (32) étant mise en oeuvre avec une machine (30) comportant un outil d'ébauche (31) formant une surface d'ébauche (32) présentant un sillon d'ébauche (33) ayant un profil en arc de cercle dont le rayon de courbure (R') est fixé par la forme de l'outil d'ébauche (31) et ayant un pas (C') défini par une consigne d'avance d'ébauche donnée à ladite machine ; ladite étape d'usinage d'une surface de finition (20) étant mise en oeuvre avec une machine (30) comportant un outil de finition (10) formant une surface de finition (20) en creusant ladite surface d'ébauche (32), sur une profondeur définie par une consigne de profondeur de passe de finition (A) donnée à ladite machine, en formant un sillon de finition (18) ayant un pas (C) défini par une consigne d'avance de finition donnée à ladite machine ;
**caractérisé en ce que** :

- ladite étape de fourniture d'un palet (16) comporte l'étape de sélectionner pour ledit palet (16) une dite matière qui présente un seuil d'apparition de piqûres lors d'une dite étape d'usinage d'une surface de finition sur une profondeur d'enlèvement de matière (D) de 0,07 mm qui est d'au moins 15% plus élevée que le seuil d'apparition de piqûres lors d'une dite étape d'usinage d'une surface de finition sur une profondeur d'enlèvement de matière (D) de 0,22 mm, chaque dit seuil d'apparition de piqûres étant la consigne d'avance de finition à partir de laquelle apparaissent des piqûres pour une profondeur d'enlèvement de matière (D) prédéterminée, chaque dite profondeur d'enlèvement de matière (D) étant la somme de la consigne de profondeur de passe de finition (A) mise en oeuvre et de la rugosité d'ébauche B' donnée par la relation :

$$B' = \frac{C'^2}{8R'}$$

avec :

- C' qui est l'avance d'ébauche ou le pas du sillon d'ébauche ; et
- R' qui est le rayon de courbure de l'outil d'ébauche ou du sillon d'ébauche;

- ladite étape d'usinage d'une surface de finition (20) comporte l'étape de sélectionner ladite consigne de profondeur de passe de finition (A) entre 0,015 mm et 0,075 mm ; et
- ladite étape d'usinage d'une surface de finition (20) comporte l'étape de sélectionner ladite consigne d'avance de finition entre 85 et 99% du seuil d'apparition de piqûres pour la profondeur d'enlèvement de matière (D) donnée par la somme de la consigne de profondeur de passe de finition sélectionnée (A) et de la rugosité d'ébauche B'.

2. Procédé selon la revendication 1, **caractérisé en ce que** ladite étape de fourniture d'un palet (16) comporte l'étape de sélectionner pour ledit palet (16) un Polythiourethane.

3. Procédé selon la revendication 2, **caractérisé en ce que** ledit Polythiourethane est le MR7.

4. Procédé selon la revendication 3, **caractérisé en ce que** ladite étape d'usinage d'une surface de finition est mise en oeuvre avec un outil de finition (10) configuré pour former un sillon de finition (18) ayant un rayon de courbure (R) compris entre 1,9 et 2,1 mm ; ladite consigne de profondeur de passe de finition (A) est comprise entre 0,03 et 0,06 mm ; tandis que ladite consigne d'avance de finition est comprise entre 0,076 et 0,102 mm/tour.

5. Procédé selon la revendication 3, **caractérisé en ce que** ladite étape d'usinage d'une surface de finition est mise en oeuvre avec un outil de finition (10) configuré pour former un sillon de finition (18) ayant un rayon de courbure (R) compris entre 4,9 et 5,1 mm ; ladite consigne de profondeur de passe de finition (A) est comprise entre 0,03 et 0,06 mm ; tandis que ladite consigne d'avance de finition est comprise entre 0,121 et 0,160 mm/tour.

6. Procédé selon la revendication 2, **caractérisé en ce que** ledit Polythiourethane est le MR8.

7. Procédé selon la revendication 6, **caractérisé en ce que** ladite étape d'usinage d'une surface de finition est mise en oeuvre avec un outil de finition (10) configuré pour former un sillon de finition (18) ayant un rayon de courbure (R) compris entre 1,9 et 2,1 mm ; ladite consigne de profondeur de passe de finition (A) est comprise entre 0,03 et 0,06 mm ; tandis que ladite consigne d'avance de finition est comprise entre 0,055 et 0,074 mm/tour.

8. Procédé selon la revendication 6, **caractérisé en ce que** ladite étape d'usinage d'une surface de finition est mise en oeuvre avec un outil de finition (10) configuré pour former un sillon de finition (18) ayant un rayon de courbure (R) compris entre 4,9 et 5,1 mm ; ladite consigne de profondeur de passe de finition (A) est comprise entre 0,03 et 0,06 mm ; tandis que ladite consigne d'avance de finition est comprise entre 0,088 et 0,117 mm/tour.

9. Procédé selon l'une quelconque des revendications 1 à 8, **caractérisé en ce que** ladite étape d'usinage d'une surface d'ébauche (32) et ladite étape d'usinage d'une surface de finition (20) sont mises en oeuvre avec une même machine (30), et ladite étape d'usinage d'une surface d'ébauche (32) comporte l'étape de sélectionner pour ladite consigne d'avance d'ébauche une valeur minimisant un temps total T de mise en oeuvre, par ladite machine (30), de l'étape d'usinage d'une surface d'ébauche (32) et de l'étape d'usinage d'une surface de finition (20).

10. Procédé selon la revendication 9, **caractérisé en ce que** ladite étape de sélectionner pour ladite consigne d'avance d'ébauche une valeur minimisant un temps total T comporte :

- l'étape de modéliser le temps total T par la relation :

$$T = K1 + \frac{K2}{C'} + \frac{K3}{C}$$

avec :

- K1 qui est une constante regroupant les temps passés par la machine (30) pour d'autres opérations que l'étape d'usinage d'une surface d'ébauche (32) et l'étape d'usinage d'une surface de finition (20) ;
- K2 qui est une constante liée à l'étape d'usinage d'une surface d'ébauche (32) ;
- K3 qui est une constante liée à l'étape d'usinage d'une surface de finition ; et
- C qui est l'avance d'ébauche ou le pas du sillon de finition ;

- l'étape de calculer pour chacune de n valeurs de consigne d'avance d'ébauche, le temps total d'usinage T respectif, avec pour chaque i-ième consigne d'avance d'ébauche, pour i pris parmi 1 à n, la i-ième consigne d'avance de finition calculée par mise en oeuvre de ladite étape de sélectionner la consigne d'avance de finition, en prenant la profondeur d'enlèvement de matière (D) donnée par la somme de la consigne de profondeur de passe de finition (A) sélectionnée et de la rugosité d'ébauche B' correspondant à la i-ième consigne d'avance d'ébauche ; et
- l'étape de sélectionner comme consigne d'avance d'ébauche la m-ième consigne d'avance d'ébauche et comme consigne d'avance de finition la m-ième consigne d'avance de finition, avec m qui est le i pour lequel le temps total T est le plus petit.

11. Procédé selon l'une quelconque des revendications 1 à 10, **caractérisé en ce que** ladite étape d'usinage d'une surface d'ébauche est mise en oeuvre avec un outil d'ébauche (31) configuré pour former un sillon d'ébauche (33) ayant un rayon de courbure (R') compris entre 33 et 34 mm ; tandis que ladite consigne d'avance d'ébauche est comprise entre 1,16 et 5,18 mm/tour.

12. Procédé selon l'une quelconque des revendications 1 à 11, **caractérisé en ce que** ledit sillon d'ébauche (33) et ledit sillon de finition (18) sont en spirale.

**Patentansprüche**

1. Verfahren zum Erhalt einer ophthalmischen Linse, das aufweist:

- einen Schritt der Bereitstellung einer Rundscheibe (16) aus einem Material, das durch spanende Bearbeitung flächenbearbeitet werden kann; und
- einen Schritt der Flächenbearbeitung durch spanende Bearbeitung einer Seite (17) der Rundscheibe (16), der nacheinander einen Schritt der spanenden Bearbeitung einer Schruppfläche (32) und einen Schritt der spanenden Bearbeitung einer Feinbearbeitungsfläche (20) aufweist, wobei der Schritt der spanenden Bearbeitung einer Schruppfläche (32) mit einer Maschine (30) durchgeführt wird, die ein Schruppwerkzeug (31) aufweist, das eine Schruppfläche (32) mit einer Schrupprille (33) formt, die ein kreisbogenförmiges Profil hat, dessen Krümmungsradius (R') durch die Form des Schruppwerkzeugs (31) festgelegt wird, und die eine durch einen für die Maschine gegebenen Schruppvorschub-Sollwert definierte Teilung (C') hat; wobei der Schritt der spanenden Bearbeitung einer Feinbearbeitungsfläche (20) mit einer Maschine (30) durchgeführt wird, die ein Feinbearbeitungswerkzeug (10) aufweist, das eine Feinbearbeitungsfläche (20) formt, indem es die Schruppfläche (32) über eine durch einen für die Maschine gegebenen Feinbearbeitungsschnittiefe-Sollwert (A) definierte Tiefe aushöhlt, indem eine Feinbearbeitungsrille (18) geformt wird, die eine durch einen für die Maschine gegebenen Feinbearbeitungsvorschub-Sollwert definierte Teilung (C) hat;
**dadurch gekennzeichnet, dass**:

- der Schritt der Bereitstellung einer Rundscheibe (16) den Schritt der Auswahl eines Materials für die Rundscheibe (16) aufweist, das eine Schwelle des Auftretens von Poren während eines Schritts der spanenden Bearbeitung einer Feinbearbeitungsfläche über eine Abtragtiefe (D) von 0,07 mm aufweist, die um mindestens 15% höher ist als die Schwelle des Auftretens von Poren bei einem Schritt der spanenden Bearbeitung einer Feinbearbeitungsfläche über eine Abtragtiefe (D) von 0,22 mm, wobei jede Schwelle des Auftretens von Poren der Feinbearbeitungsvorschub-Sollwert ist, von dem ausgehend Poren für eine vorbestimmte Abtragtiefe (D) auftreten, wobei jede Abtragtiefe (D) die Summe des angewendeten Feinbearbeitungsschnitttiefe-Sollwerts (A) und der Schrupprauigkeit B' ist, die durch die folgende Beziehung angegeben wird:

$$B' = \frac{C'^2}{8R'}$$

mit:

- C' dem Schruppvorschub oder der Teilung der Schrupprille; und
- R' dem Krümmungsradius des Schruppwerkzeugs oder der Schrupprille;

- der Schritt der spanenden Bearbeitung einer Feinbearbeitungsfläche (20) den Schritt der Auswahl des Feinbearbeitungsschnitttiefe-Sollwerts (A) zwischen 0,015 mm und 0,075 mm aufweist; und
- der Schritt der spanenden Bearbeitung einer Feinbearbeitungsfläche (20) den Schritt der Auswahl des Feinbearbeitungsvorschub-Sollwerts zwischen 85 und 99% der Schwelle des Auftretens von Poren für die Abtragtiefe (D) aufweist, die durch die Summe des ausgewählten Feinbearbeitungsschnitttiefe-Sollwerts (A) und der Schrupprauigkeit B' gegeben ist.

2. Verfahren nach Anspruch 1, **dadurch gekennzeichnet, dass** der Schritt der Bereitstellung einer Rundscheibe (16) den Schritt der Auswahl eines Polythiourethans für die Rundscheibe (16) aufweist.

3. Verfahren nach Anspruch 2, **dadurch gekennzeichnet, dass** das Polythiourethan das MR7 ist.

4. Verfahren nach Anspruch 3, **dadurch gekennzeichnet, dass** der Schritt der spanenden Bearbeitung einer Feinbearbeitungsfläche mit einem Feinbearbeitungswerkzeug (10) ausgeführt wird, das konfiguriert ist, eine Feinbearbeitungsrille (18) zu formen, die einen Krümmungsradius (R) zwischen 1,9 und 2,1 mm hat; wobei der Feinbearbeitungsschnitttiefe-Sollwert (A) zwischen 0,03 und 0,06 mm liegt; während der Feinbearbeitungsvorschub-Sollwert zwischen 0,076 und 0,102 mm/Umdrehung liegt.

5. Verfahren nach Anspruch 3, **dadurch gekennzeichnet, dass** der Schritt der spanenden Bearbeitung einer Feinbearbeitungsfläche mit einem Feinbearbeitungswerkzeug (10) ausgeführt wird, das konfiguriert ist, eine Feinbearbeitungsrille (18) zu formen, die einen Krümmungsradius (R) der zwischen 4,9 und 5,1 mm hat; wobei der Feinbearbeitungsschnitttiefe-Sollwert (A) zwischen 0,03 und 0,06 mm liegt; während der Feinbearbeitungsvorschub-Sollwert zwischen 0,121 und 0,160 mm/Umdrehung liegt.

6. Verfahren nach Anspruch 2, **dadurch gekennzeichnet, dass** das Polythiourethan das MR8 ist.

7. Verfahren nach Anspruch 6, **dadurch gekennzeichnet, dass** der Schritt der spanenden Bearbeitung einer Feinbearbeitungsfläche mit einem Feinbearbeitungswerkzeug (10) ausgeführt wird, das konfiguriert ist, eine Feinbearbeitungsrille (18) zu formen, die einen Krümmungsradius (R) zwischen 1,9 und 2,1 mm hat; wobei der Feinbearbeitungsschnitttiefe-Sollwert (A) zwischen 0,03 und 0,06 mm liegt; während der Feinbearbeitungsvorschub-Sollwert zwischen 0,055 und 0,074 mm/Umdrehung liegt.

8. Verfahren nach Anspruch 6, **dadurch gekennzeichnet, dass** der Schritt der spanenden Bearbeitung einer Feinbearbeitungsfläche mit einem Feinbearbeitungswerkzeug (10) ausgeführt wird, das konfiguriert ist, eine Feinbearbeitungsrille (18) zu formen, die einen Krümmungsradius (R) zwischen 4,9 und 5,1 mm hat; wobei der Feinbearbeitungsschnitttiefe-Sollwert (A) zwischen 0,03 und 0,06 mm liegt; während der Feinbearbeitungsvorschub-Sollwert zwischen 0,088 und 0,117 mm/Umdrehungen liegt.

9. Verfahren nach einem der Ansprüche 1 bis 8, **dadurch gekennzeichnet, dass** der Schritt der spanenden Bearbeitung einer Schruppfläche (32) und der Schritt der spanenden Bearbeitung einer Feinbearbeitungsfläche (20) mit der gleichen Maschine (30) ausgeführt werden, und der Schritt der spanenden Bearbeitung einer Schruppfläche (32) den Schritt aufweist, für den Schruppvorschub-Sollwert einen Wert auszuwählen, der eine Gesamtzeit T der Anwendung, durch die Maschine (30), des Schritts der spanenden Bearbeitung einer Schruppfläche (32) und des Schritts der spanenden Bearbeitung einer Feinbearbeitungsfläche (20) minimiert.

10. Verfahren nach Anspruch 9, **dadurch gekennzeichnet, dass** der Schritt der Auswahl eines Werts für den Schruppvorschub-Sollwert, der eine Gesamtzeit T minimiert, aufweist:

- den Schritt der Modellisierung der Gesamtzeit T durch die Beziehung:

$$T = K1 + \frac{K2}{C'} + \frac{K3}{C}$$

mit:

  - K1 einer Konstanten, die die von der Maschine (30) für andere Vorgänge als den Schritt der spanenden Bearbeitung einer Schruppfläche (32) und den Schritt der spanenden Bearbeitung einer Feinbearbeitungsfläche (20) verbrachten Zeiten zusammenfasst;
  - K2 einer Konstanten, die mit dem Schritt der spanenden Bearbeitung einer Schruppfläche (32) verbunden ist;
  - K3 einer Konstanten, die mit dem Schritt der spanenden Bearbeitung einer Feinbearbeitungsfläche verbunden ist; und
  - C dem Schruppvorschub oder der Teilung der Feinbearbeitungsrille;

- den Schritt der Berechnung der jeweiligen Gesamtzeit T der spanenden Bearbeitung für jeden von n Schruppvorschub-Sollwerten, mit für jeden i-ten Schruppvorschub-Sollwert, für i ausgewählt aus 1 bis n, dem i-ten Feinbearbeitungsvorschub-Sollwert berechnet durch Ausführung des Schritts der Auswahl des Feinbearbeitungsvorschub-Sollwerts, indem die durch die Summe des ausgewählten Feinbearbeitungsschnitttiefe-Sollwerts (A) und der Schrupprauigkeit B' entsprechend dem i-ten Schruppvorschub-Sollwert gegebene Abtragtiefe (D) genommen wird; und
- den Schritt der Auswahl als Schruppvorschub-Sollwert des m-ten Schruppvorschub-Sollwerts und als Feinbearbeitungsvorschub-Sollwert des m-ten Feinbearbeitungsvorschub-Sollwerts, mit m dem i, bei dem die Gesamtzeit T am kleinsten ist.

11. Verfahren nach einem der Ansprüche 1 bis 10, **dadurch gekennzeichnet, dass** der Schritt der spanenden Bearbeitung einer Schruppfläche mit einem Schruppwerkzeug (31) ausgeführt wird, das konfiguriert ist, eine Schrupprille (33) mit einem Krümmungsradius (R') zwischen 33 und 34 mm zu formen; während der Schruppvorschub-Sollwert zwischen 1,16 und 5,18 mm/Umdrehungen liegt.

12. Verfahren nach einem der Ansprüche 1 bis 11, **dadurch gekennzeichnet, dass** die Schrupprille (33) und die Feinbearbeitungsrille (18) spiralförmig sind.

**Claims**

1. Process for obtaining an ophthalmic lens, comprising:

a step of providing a blank (16) made of a material able to be surfaced by machining; and
a step of surfacing the face (17) of said blank (16) by machining, comprising, in succession, a step of machining a roughing surface (32), and a step of machining a finishing surface (20), said step of machining a roughing surface (32) being carried out with a machine (30) comprising a roughing tool (31) forming a roughing surface (32) comprising a roughing trough (33) having a circularly arcuate profile the radius of curvature (R') of which is fixed by the shape of the roughing tool (31) and having a pitch (C') defined by a roughing advance setpoint given to said machine; said step of machining a finishing surface (20) being carried out with a machine (30) comprising a finishing tool (10) that forms a finishing surface (20) by digging said roughing surface (32) to a depth defined by a finishing pass depth setpoint (A) given to said machine, thereby forming a finishing trough (18) having a pitch (C) defined by a finishing advance setpoint given to said machine;
**characterized in that**:

said step of providing a blank (16) comprises the step of selecting, for said blank (16), a said material that has a pitting appearance threshold during a said step of machining a finishing surface over a material removal depth (D) of 0.07 mm that is at least 15% higher than the pitting appearance threshold during a said step of machining a finishing surface over a material removal depth (D) of 0.22 mm, each said pitting appearance threshold being the finishing advance setpoint from which pitting appears for a preset material removal depth (D), each said material removal depth (D) being the sum of the finishing pass depth setpoint (A) employed and the roughing roughness B' given by the relationship:

$$B' = \frac{C'^2}{8R'}$$

where:

C' is the roughing advance or the pitch of the roughing trough; and
R' is the radius of curvature of the roughing tool or the roughing trough;

said step of machining a finishing surface (20) comprises the step of selecting said finishing pass depth setpoint (A) between 0.015 mm and 0.075 mm; and
said step of machining a finishing surface (20) comprises the step of selecting said finishing advance setpoint between 85 and 99% of the pitting appearance threshold for the material removal depth (D) given by the sum of the selected finishing pass depth setpoint (A) and the roughing roughness B'.

2. Process according to Claim 1, **characterized in that** said step of providing a blank (16) comprises the step of selecting, for said blank (16), a polythiourethane.

3. Process according to Claim 2, **characterized in that** said polythiourethane is MR7.

4. Process according to Claim 3, **characterized in that** said step of machining a finishing surface is carried out with a finishing tool (10) configured to form a finishing trough (18) having a radius of curvature (R) comprised between 1.9 and 2.1 mm; said finishing pass depth setpoint (A) is comprised between 0.03 and 0.06 mm; whereas said finishing advance setpoint is comprised between 0.076 and 0.102 mm/revolution.

5. Process according to Claim 3, **characterized in that** said step of machining a finishing surface is carried out with a finishing tool (10) configured to form a finishing trough (18) having a radius of curvature (R) comprised between 4.9 and 5.1 mm; said finishing pass depth setpoint (A) is comprised between 0.03 and 0.06 mm; whereas said finishing advance setpoint is comprised between 0.121 and 0.160 mm/revolution.

6. Process according to Claim 2, **characterized in that** said polythiourethane is MR8.

7. Process according to Claim 6, **characterized in that** said step of machining a finishing surface is carried out with a finishing tool (10) configured to form a finishing trough (18) having a radius of curvature (R) comprised between 1.9 and 2.1 mm; said finishing pass depth setpoint (A) is comprised between 0.03 and 0.06 mm; whereas said finishing advance setpoint is comprised between 0.055 and 0.074 mm/revolution.

8. Process according to Claim 6, **characterized in that** said step of machining a finishing surface is carried out with a finishing tool (10) configured to form a finishing trough (18) having a radius of curvature (R) comprised between 4.9 and 5.1 mm; said finishing pass depth setpoint (A) is comprised between 0.03 and 0.06 mm; whereas said finishing advance setpoint is comprised between 0.088 and 0.117 mm/revolution.

9. Process according to any one of Claims 1 to 8, **characterized in that** said step of machining a roughing surface (32) and said step of machining a finishing surface (20) are carried out with one and the same machine (30), and said step of machining a roughing surface (32) comprises the step of selecting, for said roughing advance setpoint, a value minimizing a total time T taken, by said machine (30), to implement the step of machining a roughing surface (32) and the step of machining a finishing surface (20).

10. Process according to Claim 9, **characterized in that** said step of selecting, for said roughing advance setpoint, a value minimizing a total time T, comprises:

the step of modeling the total time T by the relationship:

$$T = K1 + \frac{K2}{C'} + \frac{K3}{C}$$

where:

K1 is a constant grouping together the time spent by the machine (30) on operations other than the step of machining a finishing surface (32) and the step of machining a finishing surface (20);
K2 is a constant related to the step of machining a roughing surface (32);
K3 is a constant related to the step of machining a finishing surface; and
C is the roughing advance or the pitch of the finishing trough;

the step of calculating, for each of n roughing advance setpoint values, the respective total machining time T, with, for each ith roughing advance setpoint, for i taken from among 1 to n, the ith finishing advance setpoint calculated by implementing said step of selecting the finishing advance setpoint, taking into account the material removal depth (D) given by the sum of the selected finishing pass depth setpoint (A) and the roughing roughness B', corresponding to the ith roughing advance setpoint; and
the step of selecting, as roughing advance setpoint, the mth roughing advance setpoint, and, as finishing advance setpoint, the mth finishing advance setpoint, where m is the i for which the total time T is the shortest.

11. Process according to any one of Claims 1 to 10, **characterized in that** said step of machining a roughing surface is carried out with a roughing tool (31) configured to form a roughing trough (33) having a radius of curvature (R') comprised between 33 and 34 mm; whereas said roughing advance setpoint is comprised between 1.16 and 5.18 mm/revolution.

12. Process according to any one of Claims 1 to 11, **characterized in that** said roughing trough (33) and said finishing trough (18) are spirals.

Fig. 1

Fig. 2

Fig. 3

Fig. 4

Fig. 5

Fig. 6

Fig. 7

36

0,045
0,04
0,035
0,03
0,025
0,02
0,015
0,01
0,005
0

0,6   0,5   0,4   0,3   0,2   0,1   0

## Fig. 8

35

37

0,12

0,1

0,08

0,06

0,04

0,02

0

0,2   0,15   0,1   0,05   0

## Fig. 9

Fig. 10

Fig. 11

**EP 2 782 709 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0166308 A
- WO 2006097607 A
- US 20090022554 A